# EUROPEAN PATENT APPLICATION

(11) **EP 1 804 225 A2**
(43) Date of publication of application: **04.07.2007**
(21) Application number: 06123733.5
(22) Date of filing: 09.11.2006
(51) Int. Cl.: G08G 1/0967

(54) **Interactive traffic information providing method and apparatus**

(30) Priority: 30.12.2005 KR 20050135336
(71) Applicant: Samsung Electronics Co., Ltd., Suwon-si, Gyeonggi-Do (KR)
(72) Inventor: Kim, Kwang Soo, Gangnam-gu, Seoul (KR); Kim, Jin Won, Seocho-gu, Seoul (KR); Min, Hyun Suk, Yeongtong-gu, Suwon-si, Gyeonggi-do (KR); Yang, Sung Chul, Yeongtong-gu, Suwon-si, Gyeonggi-do (KR); Jung, Suk In, Seoul (KR); Yang, Hye Jung, Busan-si (KR); Kim, Jong Hyun, Jangan-gu, Suwon-si, Gyeonggi-do (KR)
(74) Representative: Grünecker, Kinkeldey, Stockmair & Schwanhäusser Anwaltssozietät

(57) **Abstract**

A traffic information providing method and apparatus. The traffic information providing a method and apparatus provides for collecting real-time traffic information and supplementary information; broadcasting the collected real-time traffic information; storing the collected supplementary information in a supplementary information database; receiving a supplementary information request from a user who confirms the broadcast real-time traffic information; searching supplementary information corresponding to the received supplementary information request; and delivering the searched supplementary information to the user. In accordance with user requests, traffic information services differentiated among the users can be delivered. A benefit can also be realized among traffic information service providers, mobile network operators and the users.

## Description

The present invention relates generally to a traffic information providing method and apparatus and, more particularly, to an interactive traffic information providing method and apparatus using broadcast services.

In recent years, as a steady growth in owner-driven cars causes serious traffic congestion and an increase in traffic accidents, various schemes have been developed that provide drivers with real time traffic information regarding road traffic conditions, accidents and the like.

In providing real time traffic information, the traffic information may be announced by traffic reporters during delivery of FM broadcasting services, be transmitted through some parts of FM data channels for FM broadcasting services like the 'i-dio' service of Munhwa Broadcasting Corporation in Korea (MBC), and be provided as a kind of added services of mobile communication companies.

However, these traffic information providing schemes provide only one-way services. That is, in such conventional real-time traffic information providing schemes, the traffic information is delivered in a manner determined by information providers.

Consequently, conventional real-time traffic information providing schemes have a weakness in delivering traffic information reflecting specific user requirements. For example, when the user desires more detailed traffic information related to some portion of previously provided traffic information, the conventional real-time traffic information providing schemes cannot deliver the more detailed traffic information.

The present invention has been made in view of the above problems. It is the object of the present invention to provide a traffic information providing method and apparatus which can deliver traffic information reflecting specific user requests.

This object is solved by the subject matter of the independent claims.

Preferred embodiments are defined in the dependent claims.

An aspect of the present invention is to provide a traffic information providing method and apparatus which can deliver interactive services in cooperation with a mobile communication network.

Another aspect of the present invention is to provide a traffic information providing method and apparatus which can deliver differentiated traffic information services among the users, according to user requests.

Another aspect of the present invention is to provide a traffic information providing method and apparatus which can realize a benefit for traffic information service providers, mobile network operators and the users.

In accordance with the invention, there is provided a traffic information providing method including the steps of collecting real-time traffic information and supplementary information; broadcasting the collected real-time traffic information; storing the collected supplementary information in a supplementary information database; receiving a supplementary information request from a user who confirms the broadcast real-time traffic information; searching supplementary information corresponding to the received supplementary information request; and delivering the searched supplementary information to the user.

Preferably, at the broadcasting step, the real-time traffic information is inserted into broadcasting data and the broadcasting data is broadcast. More preferably, the real-time traffic information is expressed as Transport Protocol Experts Group (TPEG) data in a TPEG protocol format, and the TPEG data is inserted into a data field of the broadcasting data. The TPEG data may include a data header, real-time traffic information, a location reference, and a link indicating existence of supplementary information associated with the real-time traffic information.

Preferably, the receiving of supplementary information step is performed using a mobile communication network to which the user has subscribed. The supplementary information request received may include a terminal identifier of a mobile communication terminal used by the user, and identification information to identify the supplementary information.

Preferably, at the searching step, the supplementary information is searched from the supplementary information database stored in a mobile service server that utilizes the mobile communication network, or from the supplementary information database (DB) stored in a traffic information server performing the real-time traffic information collection.

Preferably, the delivery of searched information is performed using a mobile communication network to which the user has subscribed.

In accordance with the invention, there is provided a traffic information providing apparatus including a traffic information server for collecting real-time traffic information; a broadcasting server for broadcasting the collected real-time traffic information; a mobile communication terminal for receiving the broadcast real-time traffic information and providing the received real-time traffic information to a user, and for inputting a user request demanding supplementary information associated with the real-time traffic information and transmitting a supplementary information request message in response to the inputted user request; and a mobile service server for receiving the supplementary information request message from the mobile communication terminal through a mobile communication network, for searching the demanded supplementary information from a pre-stored supplementary information database using the received supplementary information request message, and for transmitting the searched supplementary information to the mobile communication terminal through the mobile communication network.

Preferably, the broadcasting server inserts the real-time traffic information into broadcasting data and broadcasts the broadcasting data. More preferably, the broadcasting server inserts the real-time traffic information expressed as TPEG data in a TPEG protocol format into a data field of the broadcasting data.

Preferably, the mobile service server stores the supplementary information database and searches the requested supplementary information from the supplementary information database. Alternatively, the traffic information server stores the supplementary information database, and the mobile service server searches the requested supplementary information from the supplementary information database.

In accordance with the invention, there is provided a mobile communication terminal including a receiver for receiving broadcasting data having TPEG data composed of real-time traffic information; an analysis section for detecting the TPEG data in the received broadcasting data and determining existence of supplementary information associated with the real-time traffic information; a wireless communication module for transmitting a request message requesting supplementary information to a mobile communication network in response to a user command demanding the supplementary information, and for receiving in return a reply message containing the requested supplementary information from the mobile communication network; and a display section for displaying the real-time traffic information and the related supplementary information.

Preferably, the analysis section includes an analyzer corresponding to a transmission channel of the broadcasting data, and detects the TPEG data using the corresponding analyzer.

The above and other aspects and advantages of the present invention will be more clearly understood from the following detailed description taken in conjunction with the accompanying drawings, in which:
FIG. 1 shows an overview of a traffic information providing method according to the first embodiment of the present invention;
FIG. 2 shows an overview of a traffic information providing method according to the second embodiment of the present invention;
FIG. 3 illustrates a procedure to deliver interactive traffic information using the traffic information providing method of the first embodiment of the present invention;
FIG. 4 illustrates a procedure to deliver interactive traffic information using the traffic information providing method of the second embodiment of the present invention;
FIG. 5 shows the record structure of a supplementary information database used to provide interactive traffic information according to the present invention;
FIG. 6 shows a broadcasting data format for providing interactive traffic information according to the present invention;
FIGS. 7A and 7B show formats of a supplementary information request message and supplementary information reply message, respectively, exchanged between a mobile communication terminal and a mobile service server to provide the interactive traffic information according to the present invention; and
FIG. 8 is a block diagram showing the configuration of a mobile communication terminal to provide the interactive traffic information according to the present invention.

Hereinafter, preferred embodiments of the present invention are described in detail with reference to the accompanying drawings. The same reference symbols are given to the same or corresponding elements in the drawings. Some constructions or processes known in the art are not described or drawn since they would obscure the invention through unnecessary detail.

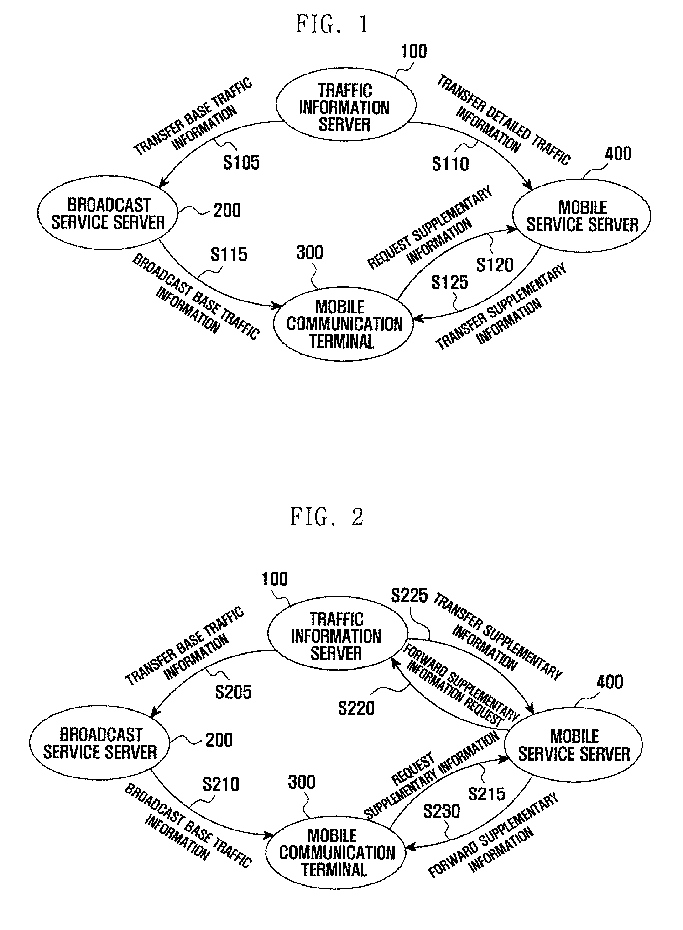

FIG. 1 describes an overview of a traffic information providing method according to the first embodiment of the present invention. In FIG. 1, a supplementary information database (DB) (not shown) is stored in a mobile service server 400 to manage supplementary information associated with base traffic information. The traffic information is provided through cooperative workings of a traffic information server 100, a broadcast service server 200 (for example a digital multimedia broadcasting (DMB) server), a mobile communication terminal 300 and the mobile service server 400.

The traffic information server 100 collects traffic information in real time, creates base traffic information regarding road traffic conditions, accidents and the like, encodes the base traffic information in a transport protocol experts group (TPEG) format, and transfers the TPEG-coded base traffic information to the broadcast service server 200 (S105). It is preferable that the traffic information server 100 inserts a link, indicating the existence of supplementary information (for example a closed circuit television (CCTV) moving image, a still image, local traffic flow data and a detailed map image) associated with the base traffic information, into the base traffic information, and transfers the base traffic information containing the link to the broadcast service server 200.

Closed-circuit television (CCTV) is the use of television cameras to transmit a signal to a specific, limited set of monitors. It differs from broadcast television in that all components are directly linked, and that the signal is not openly transmitted, though it may employ point to point wireless links. CCTV is often used for surveillance in areas where there is an increased need for security, such as banks, casinos, and airports or for observing local traffic flow.

If there exists supplementary information (for example a CCTV moving image, a still image, local traffic flow data and a detailed map image) associated with the base traffic information, the traffic information server 100 creates detailed traffic information containing the supplementary information and transfers the created detailed traffic information to the mobile service server 400 (S110).

The broadcast service server 200 broadcasts the base traffic information received from the traffic information server 100 (S115). It is preferable that the base traffic information is inserted into a portion of broadcasting data (for example, data area) and then broadcast. The traffic information server 100 and broadcast service server 200 may be managed by a single organization. For example, a DMB service providing company delivering broadcast services over mobile communication networks may manage both the traffic information server 100 and broadcast service server 200.

To broadcast the base traffic information at step S115, the base traffic information may not only be inserted into a portion of broadcasting data as described above but also inserted into any data that is periodically broadcast at a given interval.

When the mobile communication terminal 300 receives the broadcast base traffic information, it determines whether to request supplementary information associated with the base traffic information and requests, if necessary, the mobile service server 400 to send the requested supplementary information (S120). It is preferable that the supplementary information request includes the link to the supplementary information contained in the received base traffic information. If there exist multiple data items in the supplementary information associated with the base traffic information, the mobile communication terminal 300 may select one or more of the data items and request the selected data items.

The mobile service server 400 finds the requested supplementary information from the detailed traffic information received through step S110 and transfers the found supplementary information to the mobile communication terminal 300 (S125).

FIG. 2 describes an overview of a traffic information providing method according to the second embodiment of the present invention. In FIG. 2, a supplementary information DB is maintained in a traffic information server 100 to manage various supplementary information associated with base traffic information. The traffic information is provided through cooperative workings of the traffic information server 100, a broadcast service server 200, a mobile communication terminal 300 and a mobile service server 400.

The traffic information server 100 collects traffic information in real time, creates base traffic information regarding road traffic conditions, accidents and the like, encodes the base traffic information in a TPEG format, and transfers the TPEG-coded base traffic information to the broadcast service server 200 (S205). It is preferable that the traffic information server 100 inserts a link, indicating existence of supplementary information (for example a CCTV moving image, a still image, local traffic flow data and a detailed map image) associated with the base traffic information, into the base traffic information, and transfers the base traffic information containing the link to the broadcast service server 200.

The broadcast service server 200 broadcasts the base traffic information received from the traffic information server 100 (S210). It is preferable that the base traffic information is inserted into a portion of broadcasting data (for example, data area) and then broadcast. The traffic information server 100 and broadcast service server 200 may be managed by a single organization. For example, a DMB service providing company delivering broadcasting services over mobile communication networks may manage both the traffic information server 100 and broadcast service server 200.

To broadcast the base traffic information at step S210, the base traffic information may be not only inserted into a portion of broadcasting data as described above but also inserted into any data that is periodically broadcast at a given interval.

When the mobile communication terminal 300 receives the broadcast base traffic information, it determines whether to request supplementary information associated with the base traffic information and requests, if necessary, the traffic information server 100 to send the requested supplementary information via the mobile service server 400 (S215 and S220). It is preferable that the supplementary information request includes the link to the supplementary information contained in the received base traffic information. If there exist multiple data items in the supplementary information associated with the base traffic information, the mobile communication terminal 300 may select one or more of the data items and request the selected data items.

The traffic information server 100 finds supplementary information corresponding to the supplementary information request and transfers the found supplementary information to the mobile communication terminal 300 via the mobile service server 400 (S225 and S230).

As described above, in the traffic information providing methods of the present invention, real-time traffic information is broadcast by the broadcast service server 200 in a preset information providing manner, and in response to requests of individual users of the traffic information server 100, various data items such as a CCTV moving image, a still image, local traffic flow data and a detailed map image in the supplementary information associated with the broadcast traffic information are delivered to corresponding users. Consequently, differentiated traffic information services can be provided to individual users and a benefit is realized between traffic information service providers, mobile network operators and the users.

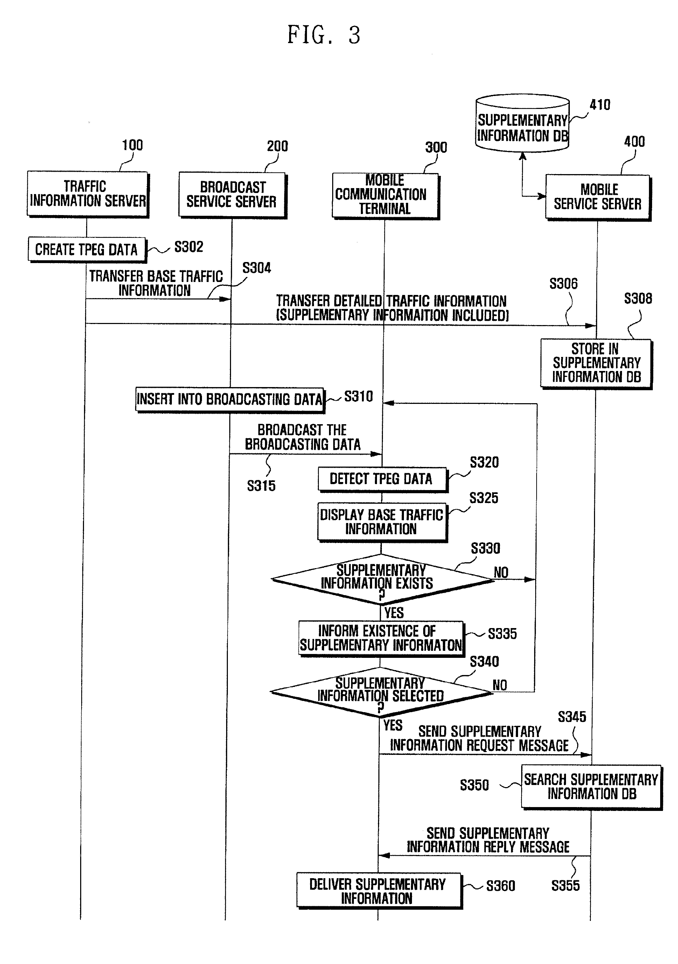

FIG. 3 illustrates a procedure to deliver interactive traffic information using the traffic information providing method of the first embodiment of the present invention. In FIG. 3, a supplementary information DB 410 is maintained in the mobile service server 400 to manage various supplementary information associated with base traffic information.

Referring to FIG. 3, firstly, the traffic information server 100 creates TPEG data (S302). That is, the traffic information server 100 collects traffic information in real time, creates base traffic information regarding road traffic conditions, accidents and the like, and encodes the base traffic information in a TPEG data format. The TPEG data is data transferable in accordance with TPEG protocols, and contains real-time traffic information regarding traffic accidents and the like. In particular, it is preferable that the TPEG data further contains a link to supplementary information (for example a CCTV moving image, a still image, local traffic flow data and a detailed map image) associated with the real-time traffic information. That is, if there exists supplementary information associated with the real-time traffic information, the TPEG data further contains a link to the supplementary information for search.

The TPEG protocols are International Standardization Organization (ISO) and Comité Européen de Normalisation (CEN) standards for delivering traffic and travel information.

The traffic information server 100 transfers the TPEG-coded base traffic information to the broadcast service server 200 (S304). If there exists supplementary information associated with the base traffic information, the traffic information server 100 creates detailed traffic information containing the supplementary information and transfers the created detailed traffic information to the mobile service server 400 (S306).

The mobile service server 400 stores the detailed traffic information in the supplementary information DB 410 (S308).

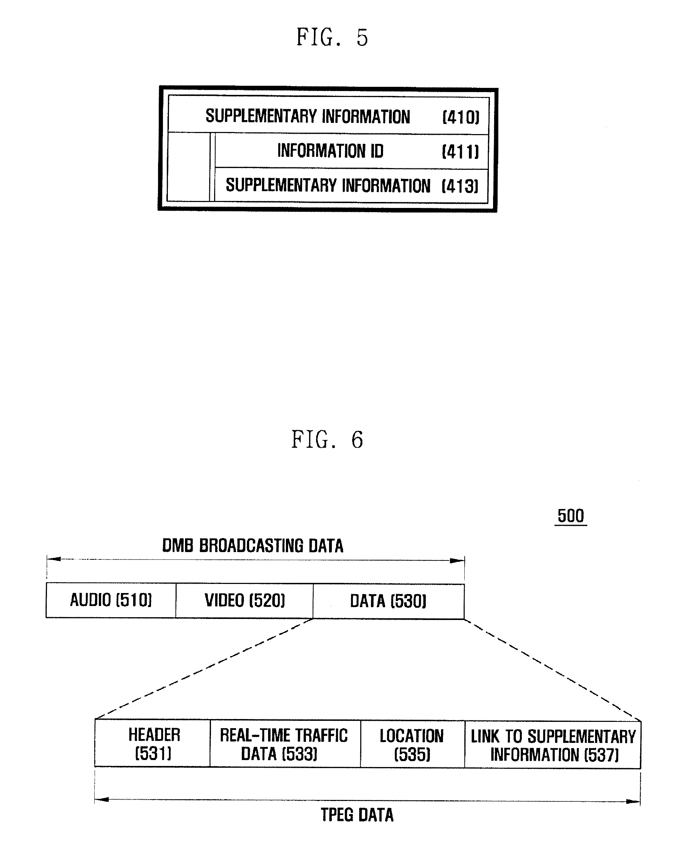

The broadcast service server 200 inserts the received base traffic information into broadcasting data of a predetermined format (S310). A broadcasting data format is shown in FIG. 6, and is described later in relation to FIG. 6.

After creation of the broadcasting data containing the base traffic information, the broadcast service server 200 broadcasts the created broadcasting data (S315). The mobile communication terminal 300 receives the broadcasting data and detects TPEG data in the received broadcasting data (S320). It is preferable that the mobile communication terminal 300 detects the TPEG data using an analyzer according to a transmission channel of the broadcasting data. For example, the mobile communication terminal 300 detects the TPEG data using a multimedia object transport (MOT) analyzer if the broadcasting data is broadcast through an MOT channel, or using a transparent data channel (TDC) analyzer if the broadcasting data is broadcast through a TDC.

After detection of the TPEG data, the mobile communication terminal 300 displays base traffic information in the TPEG data (S325). In particular, it is preferable that the mobile communication terminal 300 displays base traffic information for a local region as desired by the user. The base traffic information may be displayed in various forms such as texts, icons and detailed maps. For example, the base traffic information may be displayed in text as follows: "AA crossroads BB direction, four-car rear-end collision".

The mobile communication terminal 300 analyzes the detected TPEG data to determine whether supplementary information associated with the base traffic information exists (S330). At this time, it is preferable that the existence of the supplementary information associated with the base traffic information is determined depending upon presence of a link to (for example, an identifier of) supplementary information in the broadcasting data broadcast at step S315. For example, if a link to supplementary information is present in the detected TPEG data, the mobile communication terminal 300 determines that the supplementary information associated with the base traffic information exists.

If the supplementary information associated with the base traffic information being displayed is determined to exist at step S330, the mobile communication terminal 300 informs the user of the existence of the supplementary information (S335). For example, the mobile communication terminal 300 outputs a guide message to inform the existence of the supplementary information such as a CCTV moving image, a still image, local traffic flow data or a detailed map image, associated with the base traffic information being displayed. In addition to the guide message, it is preferable to output a selection menu for user selection of the supplementary information. If there exist multiple data items in the supplementary information associated with the base traffic information, a selection menu will enable the user to select one or more of the data items.

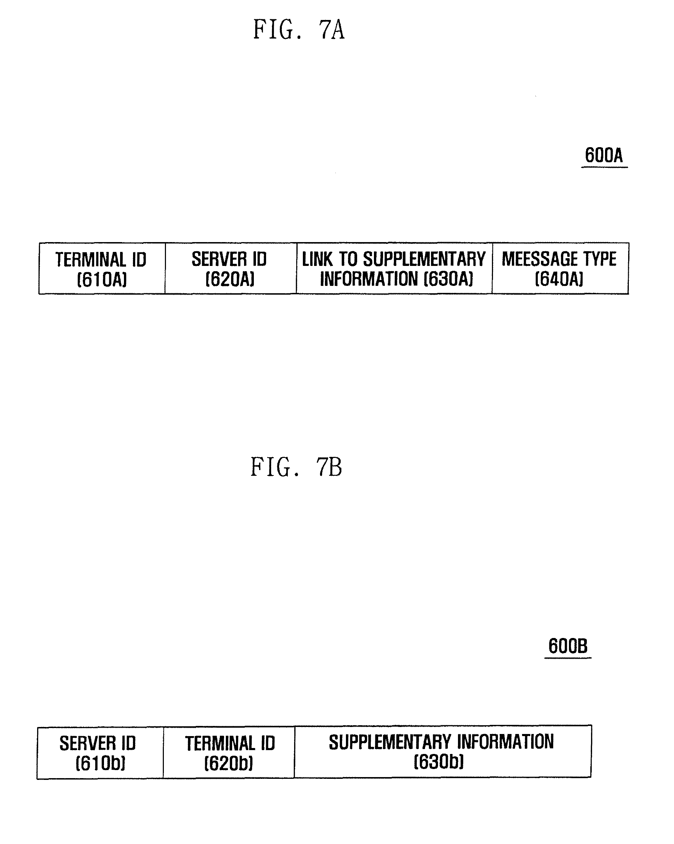

If the user selects desired supplementary information through the selection menu (S340), the mobile communication terminal 300 sends a supplementary information request message to the mobile service server 400 requesting transfer of the selected supplementary information associated with the base traffic information being displayed (S345). It is preferable that the supplementary information request message includes an identifier of the mobile communication terminal 300 and a link to supplementary information. The supplementary information request message may have a format shown in FIG. 7A, and is described below.

After reception of the supplementary information request message sent at step S345, the mobile service server 400 searches the supplementary information DB 410 using the received supplementary information request message (S350). As shown in FIG. 5, the supplementary information DB 410 includes data records each having an information identifier field 411 and a supplementary information field 413. The link to supplementary information contained in the supplementary information request message corresponds to the identifier field 411. Consequently, it is preferable that the mobile service server 400 searches the supplementary information DB 410 using the link to supplementary information contained in the supplementary information request message.

The mobile service server 400 sends a supplementary information reply message containing results of the search at step S350 to the mobile communication terminal 300 (S355). An example format of a supplementary information reply message containing a supplementary information search result is shown in FIG. 7B, and is described later in relation to FIG. 7B. The supplementary information search result may also be transmitted through wireless Internet networks.

After reception of the supplementary information reply message from the mobile service server 400, the mobile communication terminal 300 delivers supplementary information contained in the supplementary information reply message to the user (S360). It is preferable to output the supplementary information through a display section or speaker of the mobile communication terminal 300. For example, the supplementary information is outputted through the display section if it is a CCTV moving image, or through the speaker if it is voice information regarding local traffic conditions.

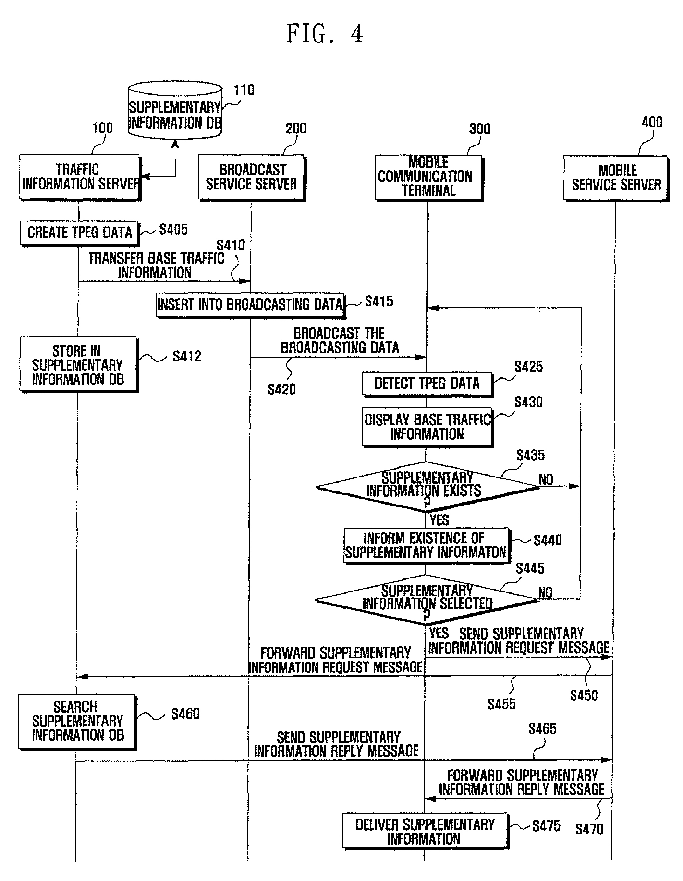

FIG. 4 illustrates a procedure to deliver interactive traffic information using the traffic information providing method of the second embodiment of the present invention. In FIG. 4, a supplementary information DB 110 is maintained in the traffic information server 100 to manage various supplementary information associated with base traffic information. The traffic information server 100 and mobile service server 400 cooperate with each other to provide traffic information.

Referring to FIG. 4, firstly, the traffic information server 100 creates TPEG data (S405). That is, the traffic information server 100 collects traffic information in real time, creates base traffic information regarding road traffic conditions, accidents and the like, and encodes the base traffic information in a TPEG data format. The TPEG data is data transferable in accordance with TPEG protocols, and contains real-time traffic information regarding traffic accidents and the like. In particular, it is preferable that the TPEG data further contains a link to supplementary information (for example a CCTV moving image, a still image, local traffic flow data and a detailed map image) associated with the real-time traffic information. That is, if there exists supplementary information associated with the real-time traffic information, the TPEG data further contains a link to the supplementary information for search.

The traffic information server 100 transfers the TPEG-coded base traffic information to the broadcast service server 200 (S410).

If there exists supplementary information associated with the base traffic information, the traffic information server 100 creates detailed traffic information containing the supplementary information and stores the detailed traffic information in the supplementary information DB 110 (S412).

The broadcast service server 200 inserts the received base traffic information into broadcasting data of a predetermined format (S415). A broadcasting data format is shown in FIG. 6, and is described below.

After creation of the broadcasting data containing the base traffic information, the broadcast service server 200 broadcasts the created broadcasting data (S420). The mobile communication terminal 300 receives the broadcasting data and detects TPEG data in the received broadcasting data (S425). It is preferable that the mobile communication terminal 300 detects the TPEG data using an analyzer according to a transmission channel of the broadcasting data. For example, the mobile communication terminal 300 detects the TPEG data using an MOT analyzer if the broadcasting data is broadcast through an MOT channel, or using a TDC analyzer if the broadcasting data is broadcast through a TDC.

After detection of the TPEG data, the mobile communication terminal 300 displays base traffic information in the TPEG data (S430). In particular, it is preferable that the mobile communication terminal 300 displays base traffic information of a local region as desired by the user. The base traffic information may be displayed in various forms such as texts, icons and detailed maps. For example, base traffic information may be displayed in text as follows: "AA crossroads BB direction, four-car rear-end collision".

The mobile communication terminal 300 analyzes the detected TPEG data to determine whether supplementary information associated with the base traffic information exists (S435). It is preferable that the existence of the supplementary information associated with the base traffic information is determined depending the presence of a link to (for example, an identifier of) supplementary information in the broadcasting data broadcast at step S420. For example, if a link to supplementary information is present in the detected TPEG data, the mobile communication terminal 300 determines that the supplementary information associated with the base traffic information exists.

If the supplementary information associated with the base traffic information being displayed is determined to exist at step S435, the mobile communication terminal 300 informs the user of the existence of the supplementary information (S440). For example, the mobile communication terminal 300 outputs a guide message to inform the existence of the supplementary information such as a CCTV moving image, a still image, local traffic flow data or a detailed map image, associated with the base traffic information being displayed. In addition to the guide message, it is preferable to output a selection menu for user selection of the supplementary information. If there exist multiple data items in the supplementary information associated with the base traffic information, it is preferable to output a selection menu enabling the user to select one or more of the data items.

If the user selects desired supplementary information through the selection menu (S445), the mobile communication terminal 300 sends a supplementary information request message to the mobile service server 400 requesting transfer of the selected supplementary information associated with the base traffic information being displayed (S450). At this time, it is preferable that the supplementary information request message includes an identifier of the mobile communication terminal 300 and a link to supplementary information. The supplementary information request message may have a format shown in FIG. 7A, and is described below.

After reception of the supplementary information request message sent at step S450, the mobile service server 400 forwards the supplementary information request message to the traffic information server 100 (S455), in which the supplementary information DB 110 is stored.

The traffic information server 100 searches the supplementary information DB 110 using the received supplementary information request message (S460).

The supplementary information DB 110 has a structure similar to that of the supplementary information DB 410 described in relation to FIG. 3. That is, like the supplementary information DB 410 shown in FIG. 5, the supplementary information DB 110 includes data records each having an information identifier field and a supplementary information field. The link to supplementary information contained in the supplementary information request message corresponds to the identifier field. Consequently, it is preferable that the traffic information server 100 searches the supplementary information DB 110 using the link to supplementary information contained in the supplementary information request message.

The traffic information server 100 sends a supplementary information reply message containing results of the search at step S460 to the mobile communication terminal 300 via the mobile service server 400 (S465 and S470). An examplary format of a supplementary information reply message for a supplementary information search result is shown in FIG. 7B, and is described below. The supplementary information search result may also be transmitted through wireless Internet networks.

After reception of the supplementary information reply message from the mobile service server 400, the mobile communication terminal 300 delivers supplementary information contained in the supplementary information reply message to the user (S475). At this time, it is preferable to output the supplementary information through a display section or speaker of the mobile communication terminal 300. For example, the supplementary information is output through the display section if it is a CCTV moving image, or through the speaker if it is voice information regarding local traffic conditions.

As illustrated in FIGS. 3 and 4, in the present invention, mobile communication networks are used to request and provide supplementary information associated with broadcast base traffic information. The supplementary information, which has a greater total volume than that of the base traffic information, is not broadcast and is provided only to the user who requests the supplementary information. Thereby loads are reduced in communication networks. In addition, the user who requests the supplementary information can be easily identified, facilitating collection of charges for the supplementary information.

FIG. 6 shows a broadcasting data format for providing interactive traffic information according to the present invention. Referring to FIG. 6, broadcasting data 500 includes an audio field 510, a video field 520, and a data field 530. TPEG data containing traffic information is stored in the data field 530.

The TPEG data contained in the data field 530 includes a header field 531 used to represent types of real-time traffic information, a real-time traffic data field 533, a location reference field 535 used to refer to a location related with the traffic information, and a link field 537 used to point to supplementary information associated with the traffic information.

As for the types, the real-time traffic information may be a road traffic message (RTM) regarding road conditions, accidents and events, public transportation information (PTI), and congestion and travel-time information (CTT). Hence, a type value representing one or a mixed one of these types can be stored in the header field 531.

FIG. 7A shows the format of a supplementary information request message 600A sent by the mobile communication terminal 300 to the mobile service server 400 to request supplementary information associated with base traffic information according to the present invention. FIG. 7B shows the format of a supplementary information reply message 600B to deliver search results of the supplementary information in response to the supplementary information request message 600A.

Referring to FIG. 7A, the supplementary information request message 600A includes a terminal ID field 610A used to identify a mobile communication terminal 300 sending the supplementary information request message 600A, a server ID field 620A used to identify a mobile service server 400 that is the destination of the supplementary information request message 600A, a link field 630A used to point to supplementary information associated with the base traffic information being displayed by the mobile communication terminal 300, and a message type field 640A used to represent a message requesting supplementary information.

Referring to FIG. 7B, the supplementary information reply message 600B includes a server ID field 610b used to identify a mobile service server 400 that provides search results of requested supplementary information, a terminal ID field 620B used to identify a mobile communication terminal 300 that is the destination of the supplementary information reply message 600B, and a supplementary information field 630B containing searched supplementary information.

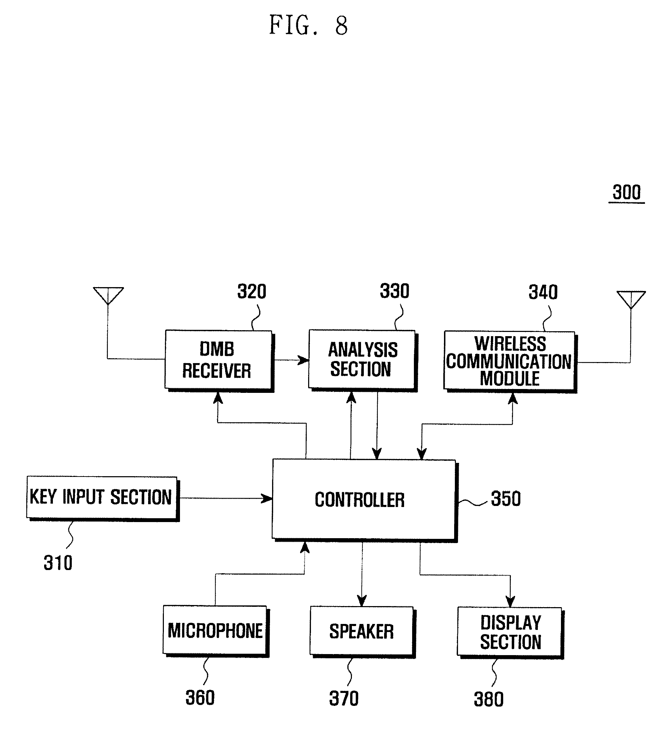

FIG. 8 is a block diagram showing a configuration of the mobile communication terminal 300 to provide traffic information reflecting user requests according to the present invention. Referring to FIG. 8, the mobile communication terminal 300 for providing traffic information comprises a key input section 310, a DMB receiver 320, an analysis section 330, a wireless communication module 340, a controller 350, a microphone 360, a speaker 370, and a display section 380.

The key input section 310 provides a user interface to input a user command for an operation of the mobile communication terminal 300. It is preferable that, during presentation of base traffic information including a link to supplementary information, the key input section 310 inputs a user command requesting the supplementary information and transfers the inputted user command to the controller 350.

The DMB receiver 320 receives broadcast DMB data. It is preferable that the DMB receiver 320 receives the DMB data which contains TPEG data composed of real-time traffic information.

The analysis section 330 analyzes the DMB data received by the DMB receiver 320 to detect TPEG data. To this end, the analysis section 330 includes analyzers corresponding to transmission channels of the DMB data, and detects the TPEG data using a corresponding analyzer. For example, the analysis section 330 includes an MOT analyzer and detects the TPEG data using the MOT analyzer if the DMB data is broadcast through an MOT channel. The analysis section 330 also includes a TDC analyzer and detects the TPEG data using the TDC analyzer if the DMB data is broadcast through a TDC. In addition, the analysis section 330 determines whether supplementary information associated with the base traffic information exists using results of the analysis of the DMB data. To this end, it is preferable to determine whether a link to supplementary information is present in the detected TPEG data. For example, if a link to supplementary information is present in the detected TPEG data, the analysis section 330 determines that there exists supplementary information associated with the base traffic information present in the TPEG data.

The wireless communication module 340 provides a communication interface to wireless networks. For example, according to the control of the controller 350, the wireless communication module 340 requests the mobile service server to transmit supplementary information associated with base traffic information contained in TPEG data, and receives (in return) the supplementary information and transfers it to the controller 350, which controls output of the supplementary information through the display section 380 or speaker 370.

The controller 350 controls an operation of the mobile communication terminal 300 according to a user command input through the key input section 310 or a pre-stored operational program. In particular, the controller 350 also controls the DMB receiver 320 to receive DMB data while the mobile communication terminal 300 operates in a DMB reception mode. The controller 350 further controls the display section 380 and speaker 370 to output traffic information received by the DMB receiver 320 on the basis of analysis results from the analysis section 330.

Additionally, during presentation of base traffic information including a link to supplementary information, in response to a user command input through the key input section 310 to request the supplementary information, the controller 350 controls the wireless communication module 340 to send a supplementary information request message to the mobile service server. Afterwards, the controller 350 controls output of the supplementary information received by the wireless communication module 340 through the display section 380 or speaker 370.

The display section 380 outputs a visual signal according to the control of the controller 350. In particular, the display section 380 displays images contained in the base traffic information and associated supplementary information.

According to the control of the controller 350, the speaker 370 outputs an acoustic signal, and the microphone 360 receives an acoustic signal such as a voice of the user and transfers the received acoustic signal to the controller 350.

The mobile communication terminal 300 having the above-described configuration detects base traffic information in the DMB data received by the DMB receiver 320 and provides the detected base traffic information to the user. When the user requests supplementary information associated with the base traffic information, the mobile communication terminal 300 transmits a request message for the supplementary information through the wireless communication module 340, and receives in return the supplementary information through the wireless communication module 340 and delivers it to the user.

Although the mobile communication terminal 300 shown in FIG. 8 includes the DMB receiver 320 and detects TPEG data in the DMB data received by the DMB receiver 320, it is not limited thereto. The mobile communication terminal of the present invention may also detect TPEG data in broadcasting data received by another receiver that receives the broadcasting data regularly broadcast at a given interval.

As apparent from the above description, the present invention aims to provide a traffic information providing method and apparatus wherein interactive traffic information can be delivered in cooperation with mobile communication networks.

Related with base traffic information, various data items in supplementary information such as a CCTV moving image, a still image, local traffic flow data and a detailed map image are provided to corresponding users on the basis of user requests, thereby delivering differentiated traffic information services among the users.

A benefit can be realized among traffic information service providers, mobile network operators and the users. For example, the mobile network operators collect charges from the users for the supplementary information and pay the mobile network operators for the use of traffic information (for example, a supplementary information database).

In addition, supplementary information, having a greater total volume than that of base traffic information, is not broadcast but is provided to only those users who requested it, thereby reducing loads on communication networks.

The present invention is disclosed in the preferred embodiments shown in this specification and in the accompanying drawings. This disclosure is not intended to limit the scope of the invention, but to serve only for illustrative purposes. It should be understood by the ordinary person skilled in the art that various changes or modifications of the embodiments are possible without departing from the scope of the invention. For example, although in the preferred embodiment, the base traffic information is inserted into a portion of DMB data and is broadcast, it may also be inserted into any broadcasting data which is regularly broadcast at a given interval, and be broadcast.

## Claims

1. A traffic information providing method comprising the steps of:
collecting real-time traffic information and supplementary information;
broadcasting the collected real-time traffic information;
storing the collected supplementary information in a supplementary information database;
receiving a supplementary information request from a user who confirms the broadcast real-time traffic information;
searching supplementary information corresponding to the received supplementary information request; and
delivering the searched supplementary information to the user.

2. The traffic information providing method of claim 1, wherein, in the broadcasting step, the real-time traffic information is inserted into broadcasting data and the broadcasting data is broadcast.

3. The traffic information providing method of claim 2, wherein the real-time traffic information is expressed as TPEG data in a TPEG protocol format, and the TPEG data is inserted into a data field of the broadcasting data.

4. The traffic information providing method of claim 3, wherein the TPEG data includes a data header, real-time traffic information, a location reference, and a link indicating existence of supplementary information associated with the real-time traffic information.

5. The traffic information providing method of claim 4, wherein the link is identification information to identify data records constituting the supplementary information in the supplementary information database, storing and managing the supplementary information.

6. The traffic information providing method of one of claims 1 to 5, wherein the supplementary information includes at least one of a CCTV moving image, a still image, local traffic flow data and a detailed map image, corresponding to the real-time traffic information.

7. The traffic information providing method of one of claims 1 to 6, wherein the receiving step is performed using a mobile communication network to which the user has subscribed.

8. The traffic information providing method of claim 7, wherein the received supplementary information request includes a terminal identifier of a mobile communication terminal used by the user, and identification information to identify the supplementary information.

9. The traffic information providing method of claim 7, wherein, in the searching step, the supplementary information is searched from the supplementary information database stored in a mobile service server that utilizes the mobile communication network.

10. The traffic information providing method of one of claims 1 to 6, wherein, in the searching step, the supplementary information is searched from the supplementary information database stored in a traffic information server performing the collecting step.

11. The traffic information providing method of one of claims 1 to 10, wherein the delivering step is performed using a mobile communication network to which the user has subscribed.

12. A traffic information providing apparatus comprising:
a traffic information server for collecting real-time traffic information;
a broadcasting server for broadcasting the collected real-time traffic information;
a mobile communication terminal for receiving the broadcast real-time traffic information and providing the received real-time traffic information to a user, for inputting a user request demanding supplementary information associated with the real-time traffic information and transmitting a supplementary information, request message in response to the inputted user request; and
a mobile service server for receiving the supplementary information request message from the mobile communication terminal through a mobile communication network, for searching the demanded supplementary information from a pre-stored supplementary information database using the received supplementary information request message, and for transmitting the searched supplementary information to the mobile communication terminal through the mobile communication network.

13. The traffic information providing apparatus of claim 12, wherein the broadcasting server inserts the real-time traffic information into broadcasting data and broadcasts the broadcasting data.

14. The traffic information providing apparatus of claim 13, wherein the broadcasting server inserts the real-time traffic information expressed as TPEG data in a TPEG protocol format into a data field of the broadcasting data.

15. The traffic information providing apparatus of claim 14, wherein the TPEG data includes a header, real-time traffic information, a location reference, and a link indicating existence of supplementary information associated with the real-time traffic information.

16. The traffic information providing apparatus of claim 15, wherein the link is identification information to identify data records constituting the supplementary information in the supplementary information database storing and managing the supplementary information.

17. The traffic information providing apparatus of claim 16, wherein the supplementary information request message includes a terminal identifier of the mobile communication terminal and the link to the supplementary information.

18. The traffic information providing apparatus of one of claims 12 to 17, wherein the supplementary information includes at least one of a CCTV moving image, a still image, local traffic flow data and a detailed map image, associated with the real-time traffic information.

19. The traffic information providing apparatus of one of claims 12 to 18, wherein the mobile service server stores the supplementary information database and searches the requested supplementary information from the supplementary information database.

20. The traffic information providing apparatus of one of claims 12 to 19, wherein:
the traffic information server stores the supplementary information database; and
the mobile service server searches the requested supplementary information from the supplementary information database.

21. A mobile communication terminal comprising:
a receiver for receiving broadcasting data having TPEG data composed of real-time traffic information;
an analysis section for detecting the TPEG data in the received broadcasting data and determining existence of supplementary information associated with the real-time traffic information;
a wireless communication module for transmitting a request message requesting supplementary information to a mobile communication network in response to a user command demanding the supplementary information, and for receiving in return a reply message containing the requested supplementary information from the mobile communication network; and
a display section for displaying the real-time traffic information and the related supplementary information.

22. The mobile communication terminal of claim 21, wherein the analysis section includes an analyzer corresponding to a transmission channel of the broadcasting data, and detects the TPEG data using the corresponding analyzer.
